# EUROPEAN PATENT APPLICATION

(11) **EP 2 525 573 A1**
(43) Date of publication of application: **21.11.2012**
(21) Application number: 11305592.5
(22) Date of filing: 17.05.2011
(51) Int. Cl.: H04N 7/14, H04N 7/15

(54) **Method and system for conducting a video conference**

(71) Applicant: Alcatel Lucent, 75007 Paris (FR)
(72) Inventor: De Mondt, Hans, 2960 Brecht (BE); Moons, Jan, 2220 Heist-op-den-Berg (BE)
(74) Representative: D'Halleweyn, Nele Veerle Trees Gertrudis

(57) **Abstract**

A method for conducting a video conference between a user at a user site and a number of correspondents, comprising: generating a visualization feed for the user, the visualization feed comprising information permitting a visualization of at least some of the correspondents, displaying at said user site the visualization feed, wherein the method further comprises transmitting a video stream depicting the user at the user site, background subtracting the video stream depicting the user to obtain a silhouette video stream of the user, and adding the silhouette video stream of the user to the visualization feed to be displayed at the user site.

## Description

### Field of Invention

The present invention relates to the field of video conferencing methods and systems. The invention further relates to a filter and a stream processing device for use in a video conferencing system.

### Background

In the field of video conferencing systems, it is important to make sure that users are well positioned in front of the camera. The user is provided with some form of feedback regarding his/her presentation.

The video stream of the own camera presents the user with its own image. This image can be distracting. If the user focuses too much on its own image, the efficiency of the video communication goes down. Further, presenting the user with its own picture makes the user more aware of the fact that the video conference is not a real life conference.

### Summary of the Invention

Embodiments of the present invention provide a video conference with an improved sense of telepresence corresponding more with real-life conferencing.

It will be understood that the term video conference is meant to include any interaction between two or more parties who are not physically located at the same site, and who interact *inter alia* through the exchange of real-time video images, regardless of whether this interaction is primarily intended for conducting business, or for recreational purposes.

To this end, according to a first aspect a method for conducting a video conference between a user at a user site and a number of correspondents is provided. The method comprises generating a visualization feed for the user, the visualization feed comprising information permitting a visualization of at least some of the correspondents and displaying at said user site the visualization feed. The visualization feed will at least allow the user to see the other correspondents. The visualization feed can be transmitted over the network. Many different embodiments are available for providing these basic steps for a video conference.

In an embodiment the method further comprises generating and transmitting a video stream depicting the user at the user site. This video stream can be used to provide a visualization feed to the other correspondents. The video stream can also be used as feedback information regarding the user's presentation during the video conference. As a further step subtracting the background from the video stream depicting the user is performed to obtain a silhouette video stream of the user. The user video stream comprises an image part relating to the user and an image part relating to the surroundings. If displayed the silhouette video stream would show only the user's body and no surrounding. An example of background subtracting is masking the image of the surroundings. This will provide a silhouette video stream that offers fewer distractions if depicted to the viewer/user. In the method the silhouette video stream of the user is added to the visualization feed to be displayed at the user site. This allows displaying the silhouette video stream.

As the user moves out of the camera view, the silhouette video stream will show only a partial silhouette. This provides sufficient feedback to the user to be alarmed that the other correspondents are provided with an incomplete video of the user.

Please note that the silhouette video stream can be depicted without a frame surrounding the silhouette video images. Background subtracting or foreground extraction are available similar image/video processing techniques. A suitable filter can be arranged to perform the video processing. According to the invention this technique is used to create an improved self-image as feedback with respect to an improved the user's presentation resulting in a more immersive experience of the video conference.

In an embodiment an additional image processing step is performed: the silhouette video stream of the user is blurred. This can result in a silhouette representation of the user formed only by a contour line or the complete figure of the user is filled with a single color. Blurring results in further loosing details regarding the presentation of the user during the video conference, without jeopardizing the feedback function. The more details are blurred, the more the user is not distracted by the feedback video image of itself.

In an embodiment a further filter is used to schematically represent the user by two mathematical round bodies, one for the head, one for the user's body. Such a mathematical representation allows further image processing, e.g. tracking the position of the head or body, in particular tracking the head and/or body when moving outside the view of the camera and providing an alarm signal in such a situation.

In an embodiment the silhouette video stream is transformed to represent a skewed silhouette video stream. This transformation is another image/video process technique widely available. Skewing the image can comprise compressing the picture more in vertical direction. The ratio horizontal/vertical compression is smaller than one. The skewing can also comprise depicting the image at an angle. The skewing results in a silhouette video stream that is similar to and represents a video stream of the user. By providing the user with the skewed silhouette video stream the user is provided with feedback that is 'clean' of distractions.

In an embodiment the video visualization stream would display a 3D-scene comprising a virtual room. The silhouette video stream is mapped on a plane (or rectangle) that is rendered in the "floor" of the 3D scene. This same plane could of course be put in a certain angle in the 3D scene dependent on usability and user preferences.

In an embodiment the silhouette video stream is processed to be added to the visualization feed so as to depict the silhouette video stream at a bottom part of the display. The user will see his silhouette and preferably the "skewed" silhouette at the bottom of his display. Depicting the position feedback in this manner will be more natural to the user, as the depicted image seems to be a shadow of his representation, and will results in fewer distractions.

In an embodiment generating the visualization feed and background subtracting is performed at a remote server. Although the image/video processing can be performed at the user/ at the client, it is advantageous to perform the filtering at a server, connected to the network. The server can efficiently filter, and when necessary amend the filter, for one or more users/correspondents. Devices using a small processor or otherwise limited devices, such as battery powered and low-end devices like Set-Top-Boxes, it is preferred to do the generating step in the network.

In an embodiment additional feedback can also be given to the user by detecting that the user isn't correctly seated anymore. The system could therefore enhance the silhouette even further by for instance also showing extra messages to the user, using colors, (3D surround) sound, etc...

In an embodiment the method further comprises comparing the silhouette video stream with a default silhouette and alarming if a difference between the silhouette video stream and a default silhouette is more than a predetermined threshold. This will provide an automated feedback system with regard to the position of the user vis-à-vis his camera. Many different embodiment of such an image processing are available and can be used in combination with the invention.

In an embodiment a filter is used detecting the user's head in the video stream, and tracking the head. If the bounding box of the head goes out of the camera's view this is detected e.g. because the box will drastically change size or will even be removed when the head is completely out of the scene. The skilled man is aware of image processing technique implementing such a filter.

In a further embodiment alarming comprises changing a color of the silhouette video stream. This will provide the user with an alarming signal.

Please note that the method according to the invention can be used in combination with one or more other methods for conducting a video conference. In an embodiment a combination with a 3D virtual environment can be made. In an embodiment the method can be combined with a motion sense system, allowing to recognize when a user would like to draw attention of the chairman of the video conference. Specifically these last kind of methods already use the user video stream as provided by the user. The method according to the invention can be implemented as a further module. According to a further aspect a system for conducting a video conference between a user at a user site and a number of correspondents connected over a network is provided. Said system comprises video cameras for transmitting a video stream of the user and/or the correspondents; a stream processing device operationally coupled to said video cameras adapted to generate a visualization feed for viewing by the user, the visualization feed comprising information permitting a visualization of at least some of the correspondents and a display at the user site for displaying the visualization feed.

Such a system is available for conducting basic video conferencing. The visualization feed allows the user but also other correspondents to view the participants in the video conference.

According to an embodiment the stream processing device are operationally connected to or comprise a filter arranged to background subtract the video stream of the user to obtain a silhouette video stream of the user. Accordingly the silhouette video stream comprises less information than the original video stream. The silhouette video stream is added to the visualization feed to be displayed at the user site. This will allow using the silhouette video stream as feedback for the user with respect to the user's position in front of the camera and the image the user sends to the other correspondents.

In an embodiment the user can also use gestures to trigger certain actions from the system. E.g. when a user raises his hand he will come more into focus on the other participants' screens. For this the user needs some kind of visual feedback that the system saw that his hand was raised (or any other relevant gesture was performed).

In an embodiment the filter is also arranged to blur the (silhouette) video stream of the user. This will results in an even less detailed video stream of the user. The blurring can result in a video image comprising only the user's contour. As an additional step the contour can be filled with a single color, such as grey.

In an embodiment the filter is also arranged to transform the silhouette video stream to represent a skewed silhouette video stream. The skewed image will make feedback image of the user resemble an image of a shadow.

In an embodiment the silhouette video stream is displayed at a bottom part of the display. In the same context video images of other correspondents can be depicted in more central areas of the display. The bottom part of the display will make a silhouette video stream resemble a shadow image even more which results in an even more immersed feeling.

In an embodiment the filter and/or the streaming processor device are located at a remote server. This will allow remote processing of the video streams.

In an embodiment the system also comprises a feedback device arranged to detect a position of the head or body of the user in the feedback image and to transmit an alarm signal if a part of the head or body moves out of the camera view. The feedback system results in automated feedback for the user regarding the position of the user in front of his camera.

In an embodiment the stream processing device is arranged to include the alarm signal in the feed provided as part of the video conferencing system. The alarm signal can comprise an image or a audio feed. The image can be depicted on the user's display at the user's site.

In an embodiment the alarm signal comprises the silhouette video stream with an artificial color. By showing the user's silhouette with a different color, the user will be alarmed and will notice the shift in position.

According to a further aspect a filter is provided to be used in combination with a video conference system. The filter is arranged to background subtract a video stream of a user to obtain a silhouette video stream of the user. The video stream is provided by a camera at the user site. The filter is further arranged to add the silhouette video stream to a visualization feed to be displayed at a user site. Such a filter allows forming a feedback image of the user that is less distracting, while the image comprises enough features to allow the user to get feedback regarding the user's representation in the video conference at and to other correspondents. The filter can further comprise any (combination) of the features mentioned in this application.

According to yet a further aspect a stream processing device is provided to be used in a video conference system according to any the embodiments disclosed in this application. The stream processing device according to the invention is arranged to be operationally coupled to video cameras. The device is adapted to generate a visualization feed for viewing by the user, the visualization feed comprising information permitting a visualization of at least some of the correspondents. According to an embodiment the stream processing device is provided by a feedback video feed from a filter comprising a background subtracted image of the user, and said video feed is added to the visualization feed. The stream processing device can be part of a client device or can be located on a server in the network.

### Brief Description of the Figures

Some embodiments of systems and methods in accordance with embodiments of the present invention are now described, by way of example only, and with reference to the accompanying drawings, in which:
Figure 1 illustrates an embodiment of the system according to the invention;
Figure 2 illustrates an image of a silhouette video stream according to the invention;
Figure 3 illustrates another embodiment of a silhouette video stream according to the invention;
Figure 4 is a flow diagram of an embodiment of the method according to the invention.

Throughout the figures, like numerals are used to refer to like elements.

### Description of Embodiments

According to a general embodiment, the present invention provides a method for conducting a video conference between a user at a user site and a number of correspondents at correspondent sites.

A known method to feedback the user is to use a picture in picture using the video stream for the camera at the user's site. However such feedback provides the user with too much detail and can result in distractions.

Embodiments of the present invention are based on the insight that the feedback image is distracting to the user. Therefore according to the invention the feedback image can be a limited image. A concise, non-literal representation of the user's own camera feed suffices for the purpose of providing feedback for the user's position with respect to the camera. Further a more natural and closer to life experience can be created.

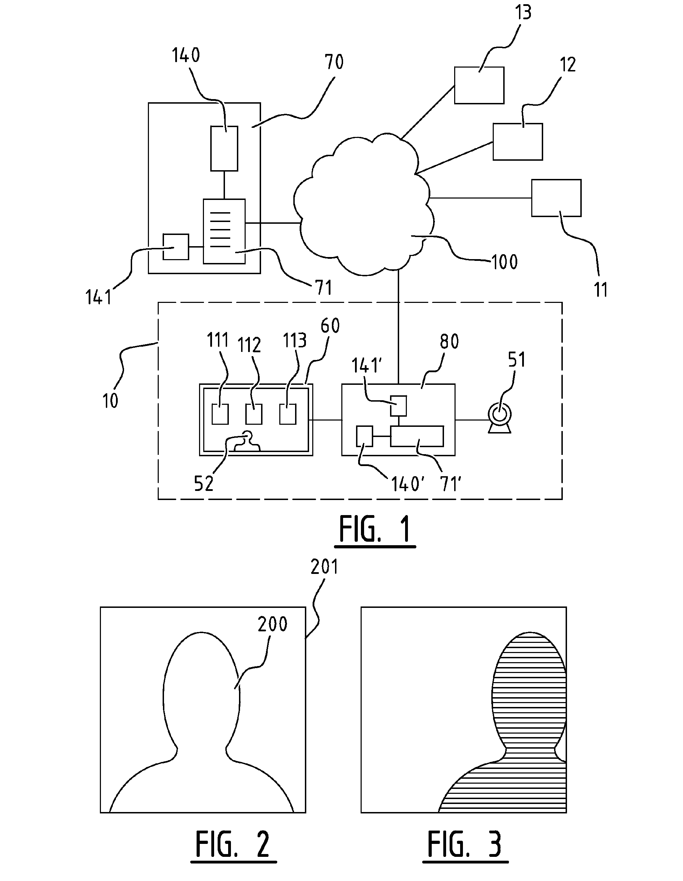

According to embodiments of the invention, the shared spatial context between the participants of the video conference is further enhanced by combining the visualizations of the different participants with a common virtual environment. Known virtual environments, known as virtual worlds or metaverses, allow interactions between their visitors through the intermediation of avatars, which are computer-generated visualizations of entities that represent individuals. The avatars may be humanoid, and may be able to display basic functions of body language. A more natural interaction can be provided to the participants by using images of the actual individuals, preferably live video images, for generating the avatar visualizations. Figure 1 presents a block diagram of an embodiment of the system of present invention. With dotted line 10 the user site is indicated. Display 60 is shown as comprising a screen. A camera 51 is arranged to create a video stream of the user.

The skilled reader will understand that the number of screens and the number of cameras are only fixed for illustrative purposes, and that they do not limit the scope of the invention. The system may further be equipped with audio output means (not shown), preferably directional audio output means, as described above. These audio output means may be provided as a speaker set built into the display 60. Network interface 100, schematically illustrated, provides communication between the respective systems of the user site 10 and the remote correspondent sites 11, 12, 13, through any of the known communication methods. In particular, network interface 100 would typically comprise the necessary hardware and software to communicate over the public switched telephone network (PSTN) or over the Internet. Hence, the display 60 is shown to receive the data necessary to generate visualizations of the remote participants via network interface 100.

The rendering of the visualizations of the remote correspondents 11, 12, 13 is preferably based on a (3D) platform. This has the advantages of allowing a level of interaction with the (3D) environment. The platform can be 2D image or a 3D environment.

In this embodiment the output of camera 51 is fed into a processing device 80. The processing device 80 may be implemented as dedicated hardware, or as an adequately programmed processor.

In one embodiment the processing device 80 transmits the video stream of the user over the network 100 to server 70 comprising stream processing device 71.

The server 70 can receive appropriate video streams for each respective remote participant 11, 12, 13. As part of the video conference the stream processing device 71 can generate a visualization feed to be sent over the network 100 to each of the participant, allowing the visualization of at least some of the other participants. The visualization feed sent to user site 10 can comprise data that can visualize some of the other correspondents 11, 12, 13 on display 60. Processor device 80 is arranged to receive the visualization feed and to process the feed such that it can be displayed by and on display 60.

In the embodiment according to Figure 1 the visualization feed comprises at least the three images 111, 112, 113 as depicted on display 60. The images (an image of a video stream) are depicted in a half circle so as to simulate a live conference. The images of other correspondents are shown in the central part of the display 60.

Camera 51 generates a video stream comprising images of the user. The image can be used to be displayed to other participants and is used as a feedback image for the user. In either the stream processor device 71' as part of the processor 80 or in stream processor device 71, the video stream from the camera 51 comprising user video data can be filtered. According to the invention the filter 140, 140' is arranged for background subtraction or foreground extraction. A video stream comprising the user at the user site is processed such that only a silhouette video stream remains.

The silhouette stream is used as a feedback stream for the user. The silhouette stream, if depicted, comprises images of the user at least partially stripped from background surroundings.

The filter 140, 140' can further comprise a grey filler allowing to fill the silhouette video stream with only a grey color. In another embodiment the filter is arranged to process the silhouette video to keep only a contour 200 of the user, such as shown in Figure 2.

In another embodiment the filter can combine the silhouette with an avatar. In a further embodiment mathematical representations, such as elliptical figures, can replace the head and/or body. In further video/processing these mathematical representations can be used for tracking positions of the user.

The silhouette video stream of the user is made available at the processing device 80, in an embodiment as part of the visualization feed, and is displayed on display 60. The stream processor 71,71' adds the silhouette video stream to the available visualization feed.

In this embodiment the stream processor 71,71' is arranged to add the silhouette video stream to the visualization feed.

As shown in Figure 1 the silhouette video stream 52 is depicted in a bottom part of the image on display 60. The user will see only his/her silhouette.

The filter 140,140' can be used to provide different video transformations allowing a more natural display of the silhouette video stream. In an embodiment the silhouette video stream is transformed such that a skewed image is provided of the user. When displayed in the bottom part of the display 60 the user will understand the picture as a shadow picture of itself. This will enhance the sensation of the video conference.

In an embodiment the filter 140 reduces the silhouette video stream into a black and white video. This reduces the necessary bandwidth for receiving the silhouette video stream from the server 70.

The video stream with the user image will contain video images only of the environment at the user site falling within the camera view. The video stream will have a frame size, indicated by reference numeral 201.

If the user moves out of the camera view, Figure 3 shows a possible image of a silhouette video stream depicting that situation. Part of the image of the user will not be displayed to the other correspondents.

According to the invention either the server 70 or the processing device 80 is provided with a feedback system 141,141' allowing comparing the user video stream with a default image. The feedback system 141,141' is available as a permanent, on the fly feedback system.

The feedback system 141,141' can provide an alarm signal when the user video stream is showing a picture similar to figure 3. In an embodiment a threshold value is determined and made available. If the user moves out of the camera view an alarm signal is made available.

The alarm signal can be used in several ways. The alarm signal can be used to signal directly to the user that he is moving out of the camera view. A message can be displayed. In an embodiment an alarm picture can be displayed.

The alarm signal can be used to initiate another filter 140,140' e.g. to color the silhouette video stream in a different, e.g. red, color. This will signal the user that he is moving out of the camera view. Figure 3 shows a striped silhouette as a signal that the user moved out of the picture.

The functions of the various elements shown in the Figures, including any functional blocks labeled as "processors" or "processing means", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

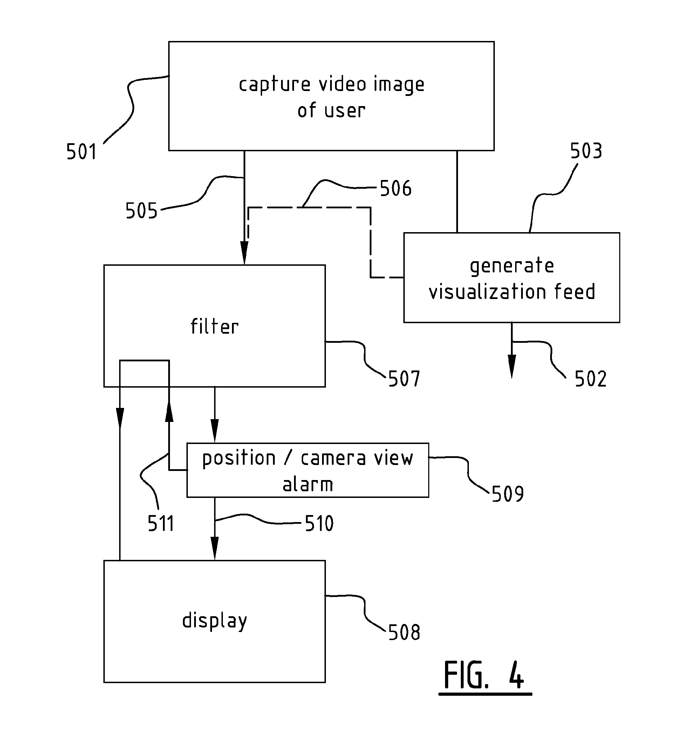

Figure 4 represents a flow diagram of an embodiment of the method according to the invention. Although different steps of the method have been numbered for illustrative purposes, this should not be seen as an indication that these steps are necessarily carried out in the numbered order. Likewise, the arrows between the different depicted steps are illustrative of one embodiment only, and are not intended to limit the scope of the invention.

The raw material for the image streams to be displayed at the correspondents' sites 20, 30, 40, consists of video images captured 501 at the site of the user 10. These video images are used to generate 503 visualization feeds, as explained above in the description of the system according to the present invention. Preferably, visualization feed are only generated or transmitted for the correspondents that need to display the user 10.

The feed can be sent 502 directly to a correspondent. In an embodiment the visualization feed 502 is transmitted to an intermediary such as a server 70, for incorporation into further feeds distributed to correspondents 11, 12, 13 acting as clients.

The video stream of the user is also used as a feedback for the user to know whether he/she is within the view of the camera, such that the user has a feeling of the image of the user provided to the other correspondent.

The user video stream is either processed at the user site 505 or at a remote site. It will arrive at the remote site as visualization feed 506.

As a first step the user video stream can be processed or filtered 507 to subtract the background image in the video stream. This operation can also be a foreground extraction. A masking technique can be used. Only a silhouette of the user will remain as image.

The filter 507 can perform more image processing such as grey filling. The silhouette video stream can also be transformed to display a skewed image, similar to a shadow on a body. The skewed image will predominantly show a compression in the vertical direction.

As a further step the method can comprise alarming when the user is moving (partially) outside the camera view. In block 509 a feedback system is provided that will compare the user video stream (or silhouette video stream) with a default image to calculate whether the image of the user is sufficient for the video conference. If the user moves outside the camera view, an alarm is produced. The alarm signal can be sent to the display directly or can be sent to the filter.

If the filter 507 receives an alarm signal, the filter can perform an additional image process step upon receiving the alarm signal, e.g. coloring the silhouette date with a different color.

The alarm signal 510 or the additionally processed video stream is received at the user site and can be displayed or otherwise provided to the user.

## Claims

1. A method for conducting a video conference between a user at a user site and a number of correspondents, comprising:
- generating a visualization feed for the user, the visualization feed comprising information permitting a visualization of at least some of the correspondents,
- displaying at said user site the visualization feed,
wherein the method further comprises
- transmitting a video stream depicting the user at the user site,
- background subtracting the video stream depicting the user to obtain a silhouette video stream of the user, and
- adding the silhouette video stream of the user to the visualization feed to be displayed at the user site.

2. Method according to claim 1, wherein as a further step to obtain the silhouette video stream of the user, the video stream of the user is blurred.

3. Method according to claim 1 or 2, wherein the silhouette video stream is transformed to represent a skewed silhouette video stream.

4. Method according to any of the preceding claims, wherein generating the visualization feed and background subtracting is performed at a remote server.

5. Method according to any of the preceding claims, wherein displaying the visualization feed comprises depicting the silhouette video stream at a bottom part of a display.

6. Method according to any of the preceding claims, wherein the method further comprises comparing the silhouette video stream with a default silhouette and alarming if a difference between the silhouette video stream and a default silhouette is more than a predetermined threshold.

7. Method according to any of the preceding claims, wherein alarming comprises changing a color of the silhouette video stream.

8. System for conducting a video conference between a user at a user site and a number of correspondents connected over a network, said system comprising:
- video cameras for creating a video stream of the user and/or the correspondents;
- stream processing device operationally coupled to said video cameras adapted to generate a visualization feed for viewing by the user, the visualization feed comprising information permitting a visualization of at least some of the correspondents
- a display at the user site for displaying the visualization feed;
wherein the stream processing device are operationally connected to a filter arranged to background subtract the video stream of the user to obtain a silhouette video stream of the user and to add the silhouette video stream to the visualization feed to be displayed at the user site.

9. System according to claim 8, wherein the filter is also arranged to blur the (silhouette) video stream of the user.

10. System according to claim 8 or 9, wherein the filter is also arranged to transform the silhouette video stream to represent a skewed silhouette video stream

11. System according to any of the claims 8 - 10, wherein the filter is located at a remote server.

12. System according to any of the claims 8 - 11, wherein the silhouette video stream is displayed at a bottom part of the display.

13. System according to any of the claims 8 - 12, wherein the system also comprises a feedback device arranged to detect in the video stream of the user a position of the user when depicted, and to transmit an alarm signal if the position is partially outside the depicted image, wherein for example the stream processing device is arranged to include the alarm signal in the visualization feed.

14. Filter to be used in a video conference system according to any of the claims 8-13 or a method according to any of the claim 1-7, the filter arranged to background subtract a video stream of a user to obtain a silhouette video stream of the user and to add the silhouette video stream to a visualization feed to be displayed at a user site.

15. Stream processing device to be used in a video conference system according to any of the claims 8-13 or a method according to any of the claim 1-7, the stream processing device arranged to be operationally coupled to video cameras and adapted to generate a visualization feed for viewing by the user, the visualization feed comprising information permitting a visualization of at least some of the correspondents, the stream processing device further comprising a filter according to claim 14.
